# EUROPEAN PATENT APPLICATION

(11) **EP 2 407 420 A1**
(43) Date of publication of application: **18.01.2012**
(21) Application number: 10750499.5
(22) Date of filing: 26.02.2010
(51) Int. Cl.: C01B 3/38, H01M 8/06

(54) **HYDROGEN GENERATION APPARATUS, METHOD FOR MANUFACTURING SAME, AND FUEL CELL SYSTEM UTILIZING SAME**

(30) Priority: 09.03.2009 JP 2009054557
(71) Applicant: Panasonic Corporation, Kadoma-shi Osaka 571-8501 (JP)
(72) Inventor: Yuuji Mukai c/o Panasonic Corporation, Chuo-ku Osaka-shi Osaka 540-6207 (JP); Akira Maenishi c/o Panasonic Corporation, Chuo-ku Osaka-shi Osaka 540-6207 (JP); Kunihiro Ukai c/o Panasonic Corporation, Chuo-ku Osaka-shi Osaka 540-6207 (JP)
(74) Representative: Schwabe - Sandmair - Marx
(86) International application number: PCT/JP2010/001350
(87) International publication number: WO 2010/103740

(57) **Abstract**

An object is to provide a hydrogen generation apparatus in which water can be helically flow down in an evaporator without fail, a method for manufacturing the hydrogen generation apparatus, and a fuel cell system using the hydrogen generation apparatus. The hydrogen generation apparatus includes a reformer configured to generate a hydrogen-containing gas; an evaporator 8 which includes an inner tube 9 and an outer tube 10, and a deformed hollow helical member 18 helically interposed between the inner tube 9 and the outer tube 10 and which is configured to evaporate the water supplied to the reformer 8; and a heat source 2 configured to evaporate the water. The evaporator 8 is configured such that the water is supplied to a helical flow channel 8A defined by the inner tube 9, the outer tube 10, and the hollow helical member 18 and evaporated by the heat source 2.

## Description

### Technical Field

The present invention relates to a hydrogen generation apparatus configured to react a hydrocarbon compound with water to generate a hydrogen-containing gas, a method for manufacturing the hydrogen generation apparatus, and a fuel cell system utilizing the hydrogen generation apparatus, and in particular, to a water evaporator.

### Background Art

In a power generation system including a fuel cell, a reformer performs a steam reforming reaction using a hydrocarbon compound and steam as a raw material thereby producing a reformed gas which contains hydrogen, carbon dioxide, carbon monoxide, unreacted methane, and steam. Next, a carbon monoxide decreasing unit, such as a shift unit and a selective oxidation unit, eliminates a carbon monoxide harmful for the fuel cell, whereby a fuel gas is produced. The fuel cell generates electric power by using the produced fuel gas.

The steam required for the steam reforming reaction is obtained from the water evaporated by an evaporator disposed upstream of the reformer. For a heat source for the evaporation, a combustion unit combusts an unused fuel gas discharged from the fuel cell, and heat of a combustion exhaust gas obtained by the combustion is generally used as the heat source.

Hydrogen generation apparatuses having a variety of various evaporators have been proposed (see, for example, Patent Document 1).

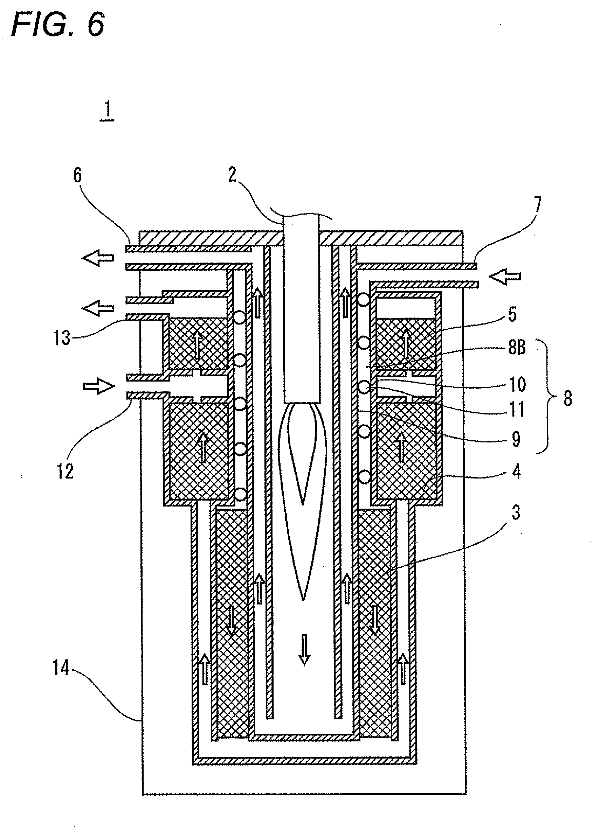

A hydrogen generation apparatus described in Patent Document 1 is briefly described below by reference to Fig. 6. Fig. 6 is a cross sectional view showing a configuration of a related art hydrogen generation apparatus.

As shown in Fig. 6, the related art hydrogen generation apparatus includes a heat source 2 including a burner (hereinafter referred to simply as a "burner"), a reforming catalyst 3, a shift catalyst 4, a selective oxidation catalyst 5, an evaporator 8, and a heat insulating material 14 configured to thermally insulate the elements 2, 3, 4, 5 and 8. Hydrocarbon and water serving as a raw material are fed from a raw material feed port 7, and a combustion gas of the burner 2 is discharged from an exhaust port 6. The entirety of the hydrogen generation apparatus is thermally insulated by the heat insulating material 14.

An unused fuel gas discharged from a fuel cell is used as fuel for the burner 2 configured to supply heat of reaction required for a steam reforming reaction. The reforming catalyst 3 contains ruthenium as a main component, and a mixed gas containing a raw material and steam react therein, to produce a reformed gas containing hydrogen, carbon dioxide, carbon monoxide, unreacted methane, and steam, In the shift catalyst 4, the carbon monoxide contained in the reformed gas react with the steam contained in the reformed gas, whereby a concentration of carbon monoxide is decreased to about one percent or less. The reformed gas is mixed with air fed from an air feed port 12, and the selective oxidation catalyst 5 selectively eliminates carbon monoxide through combustion, whereby a fuel gas is produced.

The fuel gas generated as described above is supplied from a fuel gas exit port 13 to the fuel cell.

The steam supplied to the reforming catalyst 3 is obtained by heating water in the evaporator 8 using a combustion gas combusted by the burner 2. The evaporator 8 includes an inner tube 9, an outer tube 10, and a helical rod 11 sandwiched therebetween. The raw material and water fed form the raw material feed port 7 is heated by the combustion gas produced by the burner 2 in the course of flowing down through a helical space 8B defined by the helical rod 11. By providing the helical rod 11 between the inner tube 9 and the outer tube 10, a heat transfer area sufficient for evaporating water is assured. This configuration can provide a small and high performance hydrogen generation apparatus.

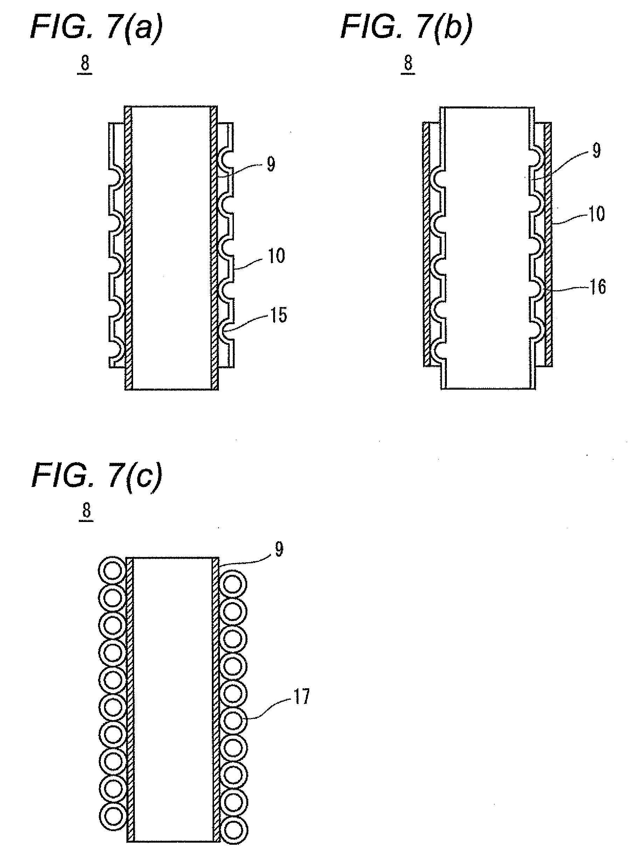

A configuration of the evaporator 8 without a helical rod is also disclosed (see, for example, Patent Document 2). Patent Document 2 discloses configurations of three types of evaporators as shown in cross sectional views of Fig. 7(a) to 7(c).
Fig. 7(a) is a cross sectional view showing an example of related art evaporator. Fig. 7(b) is a cross sectional view showing another example of related art evaporator. Fig. 7(c) is a cross sectional view showing yet another example of related art evaporator.

In the evaporator 8 shown in Fig. 7(a), a concave helical rib 15 is formed on an inside of the outer tube 10, and the helical rib 15 is combined with the inner tube 9 so as to tightly contact the inner tube 9. Water to be evaporated flows down through a helical space defined between the inner tube 9 and the outer tube 10.

In the evaporator 8 shown in Fig. 7(b), a convex helical rib 16 is formed on an outside of the inner tube 9, and the helical rib 16 is combined with the outer tube 10 so as to tightly contact the outer tube 10. The water to be evaporated flows down through a helical space defined between the inner tube 9 and the outer tube 10, similar to the example described above.

In the evaporator 8 shown in Fig. 7(c), a pipe 17 is helically wound around and tightly contacts the inner tube 9. The water to be evaporated flows down through the pipe 17.
Patent Document 1: JP-B-4145785
Patent Document 2: JP-A-2002-211905

### Summary of the Invention

### Problem to be Solved by the Invention

However, in the evaporator described in Patent Document 1, since water helically flow down in order to assure a heat transfer area required for evaporation, the inner tube 9 has to tightly contact the helical rod 11, and also the outer tube 10 has to tightly contact the helical rod 11. This is because if they are spaced from each other, unevaporated water flow down through the spacing, and a part of the flowed-down water is supplied to the reforming catalyst 3 while remaining unevaporated. As a result, the water flowing down to the reforming catalyst 3 leads to a partial decrease in temperature of the reforming catalyst 3, thereby significantly deteriorating hydrogen generation ability. Further, due to a sudden temperature change in the reforming catalyst 3, cracking or powdering of the reforming catalyst 3 is caused, which may adversely affect the life of the hydrogen generation apparatus. Since the evaporator 8 is heated from a downstream side to an upstream side by a hot combustion gas, the downstream side of the evaporator 8 becomes hotter than the upstream side thereof. For this reason, the water flowing down through the spacing between the helical rod 11 and the inner tube 9 or between the helical rod 11 and the outer tube 10 reaches the downstream side having a higher temperature within a short period of time. Therefore, the water is rapidly heated, thereby momentarily causing intensive boiling. When explosive bumping occurs for this reason, the gas in the hydrogen generation apparatus is instantaneously forced out toward the fuel cell from the fuel gas exit port 13. As a result, the reformed gas instantaneously forced out toward the fuel cell fails to be subjected to the reactions in the reforming catalyst, the shift catalyst, and the selective oxidation catalyst. Consequently, the reformed gas contains a smaller amount of hydrogen and has a high concentration of carbon monoxide, thereby causing a problem of the fuel cell going into a stop of power generation for reasons of a deficiency in hydrogen or carbon monoxide poisoning.

In the meantime, in relation to the evaporator described in Patent Document 2, so long as the inner tube 9 and the outer tube 10 shown in Figs. 7(a) and 7(b) are fitted to the helical ribs 15 or 16 in a slightly compressed manner, spacing between the ribs and the cylinders is eliminated, so that occurrence of the problem described in Patent Document 1 can be avoided.

However, in the evaporator shown in Figs. 7(a) and 7(b), the ribs 15 and 16 are formed through extrusion, and hence an extrusion height of the ribs 15 and 16 is limited. Specifically, when the helical ribs 15 and 16 are formed by means of extrusion of a cylinder made of stainless steel and having a thickness of 1 mm through use of, for example, a circular jig, unless the height of ribs to be extruded is limited to 2 mm or less, a thickness of extremities of the respective ribs will become smaller to thereby cause cracking, etc.. Therefore, a width of a channel of spacing existing between the inner tube 9 and the outer tube 10 through which water to be evaporated flows down comes to 2 mm or less. Consequently, since a pressure loss occurring during evaporation becomes greater due to the small width of the channel, there arises a problem of an increase in energy required to forcefully push the raw material fed along with water at high pressure.

In the meantime, the width of the channel for water to be evaporated, the pressure loss in the evaporator, etc, are design elements, and it is desirable to be able to arbitrarily design the elements. However, the above-described evaporator encounters a problem of a limited degree of design freedom.

Since the evaporator shown in Fig. 7(c) is configured to evaporate water in the pipe 17, a diameter of the pipe 17 wound around is inevitably determined by a diameter of the inner tube 9. Given that an outer diameter of the inner tube 9 is 10 cm, the diameter of the pipe 17 wound around will be about 10 mm or less. Consequently, the inner diameter of the pipe 17 comes to about 8 mm which is narrow for a channel through which water flows when evaporated. Therefore, there arises a problem of an increase in pressure loss.

The present invention was made to solve the problem, and an object there of is to provide a hydrogen generation apparatus that makes it possible to cause water to helically flows down through an interior of the evaporator without fail.

### Means for Solving the Problem

In order to solve the above-described problem in the related art, a hydrogen generation apparatus includes: a reformer configured to generate a hydrogen-containing gas; an evaporator which includes an inner tube, an outer tube, and a deformed helical member helically interposed between the inner tube and the outer tube and which is configured to evaporate the water supplied to the reformer; and a heat source, wherein the evaporator is configured such that the water is supplied to a helical water channel defined by the inner tube, the outer tube, and the helical member and evaporated by the heat source.

With this configuration, the helically deformed helical member is provided between the inner tube and the outer tube, whereby contact areas between the helical member and the inner tube and the outer tube are thereby increased, and areas of the helical member separated from the inner tube and the outer tube are eventually decreased. Therefore, the spacing between the helical member and the inner tube and the outer tube can be reduced. As a result, it is possible to implement a highly reliable hydrogen generation apparatus which prevents deterioration of hydrogen generation capability, cracking of catalysts, and generation of carbon monoxide due to bumping.

In the present invention, a method for manufacturing a hydrogen generation apparatus including: a reformer; an evaporator including an inner tube, an outer tube, and a helical member helically interposed between the inner tube and the outer tube; and a heat source, the method includes: a step of helically placing the helical member between the inner tube and the outer tube; and enlarging the inner tube in a diameter direction thereof such that the helical member is pressed between the inner tube and the outer tube so as to compressively deform the helical member thereby forming the evaporator.

With this method, it is possible to manufacture a hydrogen generation apparatus capable of preventing occurrence of spacing between the inner tube and the outer tube by deforming the helical member without fail.

In the present invention, a method for manufacturing a hydrogen generation apparatus including: a reformer; an evaporator including an inner tube, an outer tube, and a helical member helically interposed between the inner tube and the outer tube; and a heat source, the method includes: a step of helically placing the helical member between the inner tube and the outer tube; and a step of contracting the outer tube in a diameter direction thereof such that the helical member is pressed between the inner tube and the outer tube so as to compressively deform the helical member thereby forming the evaporator.

With this method, it is possible to manufacture a hydrogen generation apparatus capable of preventing occurrence of spacing between the inner tube and the outer tube by deforming a cross-sectional shape of the helical member without fail.

In the present invention, a method for manufacturing a hydrogen generation apparatus that includes: a reformer; an evaporator including an inner tube, an outer tube, a helical member helically interposed between the inner tube and the outer tube; and a heat source, the method includes: a step of helically placing the helical member between the inner tube and the outer tube; and a step of enlarging the helical member until the helical member is deformed to have an oval shape along an axial direction of the inner tube and the outer tube thereby forming the evaporator.

With this method, it is possible to manufacture a hydrogen generation apparatus capable of preventing occurrence of spacing between the inner tube and the outer tube by deforming the helical member without fail.

A fuel cell system of the present invention includes: the hydrogen generation apparatus described above; and a fuel cell. Accordingly, it is possible to implement a fuel cell system which includes a highly reliable hydrogen generation apparatus preventing occurrence of deterioration of hydrogen generation capability, cracking of a catalyst and generation of carbon monoxide caused by bumping, and which stably operates over a long period.

### Advantages of the Invention

In relation to the hydrogen generation apparatus of the present invention and the method for manufacturing the hydrogen generation apparatus, a deformed helical member is provided, thereby preventing occurrence of spacing between the inner tube and the outer tube, As a consequence, occurrence of deterioration of hydrogen generation capability, cracking of a catalyst, and generation of carbon monoxide caused by bumping are prevented, whereby a highly reliable hydrogen generation apparatus can be readily implemented.

### Brief Description of the Drawings

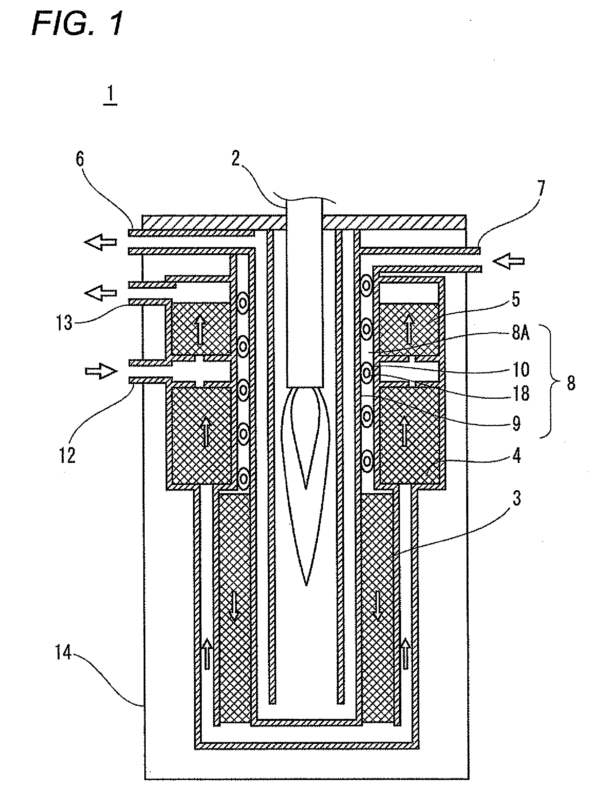

Fig. 1 is a schematic block diagram of a hydrogen generation apparatus of a first embodiment of the present invention.

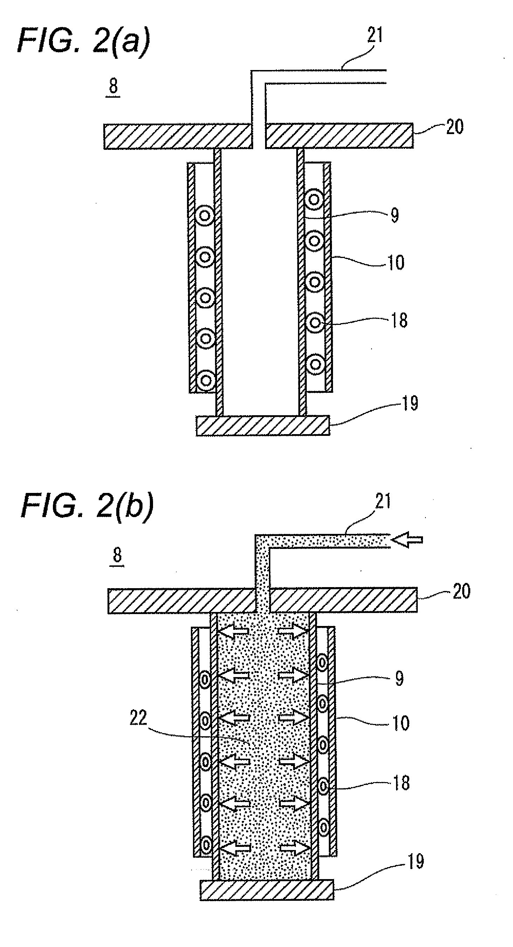

Fig. 2(a) is a cross sectional view for explaining a state before enlargement of an inner tube of an evaporator in the hydrogen generation apparatus of the first embodiment of the present invention, and Fig. 2(b) is a cross sectional view for explaining a state after the enlargement of the inner tube.

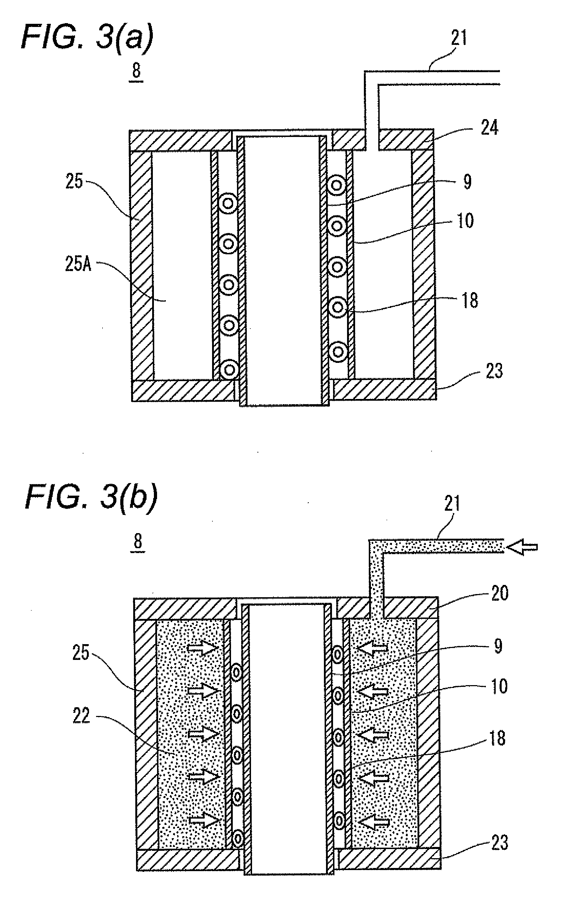

Fig. 3(a) is a cross sectional view for explaining a state before contraction of an outer tube of an evaporator of another example of the hydrogen generation apparatus of the first embodiment of the present invention, and Fig. 3(b) is a cross sectional view for explaining a state after the contraction of the outer tube.

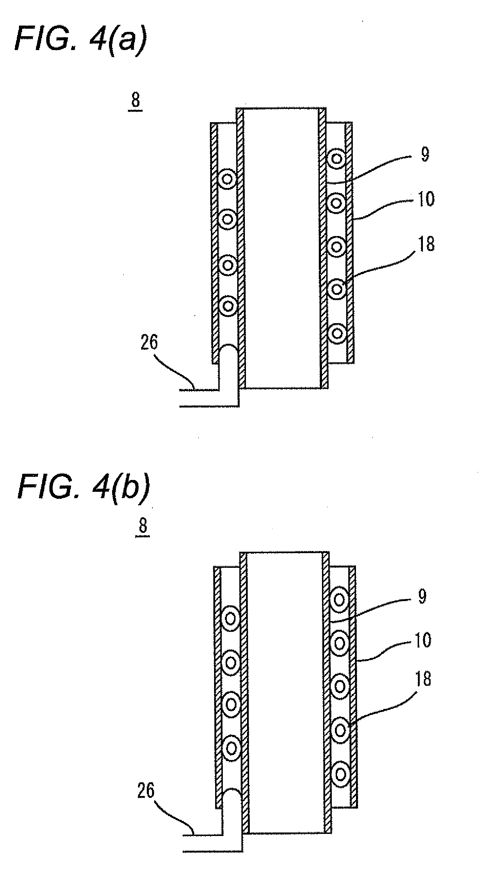

Fig. 4(a) is a cross sectional view for explaining a state before enlargement of a hollow helical member in an evaporator of yet another example of the hydrogen generation apparatus of the first embodiment of the present invention, and Fig. 4(b) is a cross sectional view for explaining a state after the enlargement of the helical member.

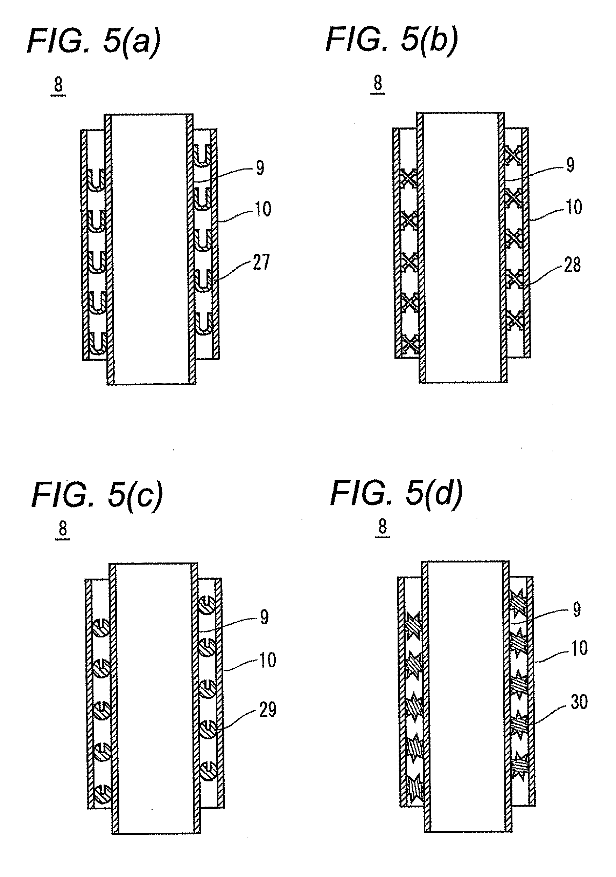

Fig. 5(a) is a schematic cross sectional view for explaining an evaporator including a helical member having a U-shaped cross sectional shape in a hydrogen generation apparatus of a second embodiment of the present invention, Fig. 5(b) is a schematic cross sectional view for explaining an evaporator including a helical member having an X-shaped cross sectional shape in the hydrogen generation apparatus of the second embodiment of the present invention, Fig. 5(c) is a schematic cross sectional view for explaining an evaporator including a helical member having a C-shaped cross sectional shape in the hydrogen generation apparatus of the second embodiment of the present invention, and Fig. 5(d) is a schematic cross sectional view for explaining an evaporator including a helical member having a star-shaped cross sectional shape in the hydrogen generation apparatus of the second embodiment of the present invention.
Fig. 6 is a cross sectional view showing a configuration of a related art hydrogen generation apparatus.
Fig. 7(a) is a cross sectional view showing an example of a related art evaporator, Fig. 7(b) is a cross sectional view of another example of a related art evaporator, and Fig. 7(c) is a cross sectional view showing yet another example of a related art evaporator.

### Mode for Carrying Out the invention

A first invention includes a configuration which includes: a reformer configured to generate a hydrogen-containing gas; an evaporator which includes an inner tube, an outer tube, and a deformed helical member helically interposed between the inner tube and the outer tube and which is configured to evaporate water supplied to the reformer; and a heat source configured to evaporate the water, wherein the evaporator is configured such that the water is supplied to a helical water channel defined by the inner tube, the outer tube, and the helical member and evaporated by the heat source. The helically deformed helical member is provided between the inner tube and the outer tube, whereby contact areas between the helical member and the inner tube and the outer tube are thereby increased, and portions of the helical member separated from the inner tube and the outer tube are eventually decreased. Therefore, the spacing between the helical member and the inner tube and the outer tube can be reduced. As a result, it is possible to implement a highly reliable hydrogen generation apparatus which prevents deterioration of hydrogen generation capability, cracking of catalysts, and generation of carbon monoxide due to bumping.

In a second invention based on the first invention, the helical member is interposed between the inner tube and the outer tube in a state in which the helical member is deformed within an elastic deformation range. With this configuration, since a large temperature change occurs at start-up and turn-off of the hydrogen generation apparatus, the diameter of the inner tube and the diameter of the outer tube change due to thermal expansion and thermal contraction. However, since the helical member is disposed while remaining deformed within the elastic deformation range, the change in diameter is absorbed, and the portions of the helical member separated from the inner tube and the outer tube are reduced. Consequently, a chance to supply unevaporated water to a reforming catalyst decreases.

In a third invention based on the first or second invention, the helical member has a hollow oval shape in cross section, and a direction of a major axis of the oval shape is disposed in an axial direction of the inner tube and the outer tube. If the helical member has a circular shape in cross section, contacts between the helical member and the inner tube and the outer tube are mere point contacts. Moreover, since the helical member cannot be formed in a perfect circular shape, there is resultantly produced many gap portions in which the point contact cannot be assured whereby the helical member does contact the inner tube and the outer tube. In contrast, if the helical member has an oval shape in cross section as in the present invention, a contact area between the hollow helical member and the inner tube and the outer tube can be increased. Hence, the production of the gap portions in which the helical member does not contact the inner tube and the outer tube can be significantly reduced, and the water can be significantly avoided from flowing down through the gap portions.

In a fourth invention based on the third invention, at least one end of the helical member is sealed. With this configuration, the water is prevented from intruding into the hollow of the helical member, and occurrence of bumping can be prevented.

In a fifth invention based on the first or second invention, a depressed portion is formed in a part of the helical member in cross section. With this configuration, it is possible to prevent occurrence of spacing between the helical member having the depressed portion and the inner tube and the outer tube. As a consequence, it is possible to implement a highly reliable hydrogen generation apparatus which prevents deterioration of hydrogen generation capability, cracking of catalysts, and generation of carbon monoxide due to bumping.

A sixth invention is directed to a method for manufacturing a hydrogen generation apparatus including: a reformer configured to generate a hydrogen-containing gas; an evaporator which includes an inner tube, an outer tube, and a helical member helically interposed between the inner tube and the outer tube and which is configured to evaporate water supplied to the reformer; and a heat source configured to evaporate the water, the method including: a step of helically placing the helical member between the inner tube and the outer tube; and a step of enlarging the inner tube in a diameter direction thereof such that the helical member is pressed between the inner tube and the outer tube so as to compressively deform the helical member thereby forming the evaporator. Accordingly, it is possible to manufacture a hydrogen generation apparatus capable of preventing occurrence of spacing between the inner tube and the outer tube by deforming the helical member without fail.

A seventh invention is directed to a method for manufacturing a hydrogen generation apparatus including: a reformer configured to generate a hydrogen-containing gas; an evaporator which includes an inner tube, an outer tube, and a helical member helically interposed between the inner tube and the outer tube and which is configured to evaporate water supplied to the reformer; and a heat source configured to evaporate the water, the method including: a step of helically placing the helical member between the inner tube and the outer tube; and a step of contracting the outer tube in a diameter direction thereof such that the helical member is pressed between the inner tube and the outer tube so as to compressively deform the helical member thereby forming the evaporator. Accordingly, it is possible to manufacture a hydrogen generation apparatus capable of preventing occurrence of spacing between the inner tube and the outer tube by deforming a depressed portion in the helical member without fail.

An eighth invention is directed to a method for manufacturing a hydrogen generation apparatus that includes: a reformer configured to generate a hydrogen-containing gas; an evaporator which includes an inner tube, an outer tube, a helical member helically interposed between the inner tube and the outer tube and which is configured to evaporate water supplied to the reformer; and a heat source configured to evaporate the water, the method including: a step of helically placing the helical member between the inner tube and the outer tube; and a step of enlarging the helical member until the helical member is deformed to have an oval shape along an axial direction of the inner tube and the outer tube thereby forming the evaporator. Accordingly, it is possible to manufacture a hydrogen generation apparatus capable of preventing occurrence of spacing between the inner tube and the outer tube by deforming the helical member without fail.

In a ninth invention based on any one of the sixth through eighth inventions, the helical member is deformed within an elastic deformation range. Even when the diameter of the inner tube or the outer tube is thermally deformed, the helical member follows the deformation, thereby preventing occurrence of spacing without fail. As a consequence, it is possible to implement a hydrogen generation apparatus that stably operates for a long period of time.

A tenth invention is directed to a fuel cell system including: the hydrogen generation apparatus of any one of the first through fifth inventions; and a fuel cell. Accordingly, it is possible to implement a fuel cell system which includes a highly reliable hydrogen generation apparatus and which stably operates over a long period.

Although embodiments of the present invention are described by reference to the drawings, the configuration of the invention identical with that described in the related art is assigned the like reference numerals, and their detailed explanations are omitted here for brevity. The invention shall not be confined to the embodiments.

### (First Embodiment)

A hydrogen generation apparatus of a first embodiment of the present invention is hereunder described in detail.

Fig. 1 is a schematic block diagram of a hydrogen generation apparatus 1 of the first embodiment of the present invention. Elements shown in Fig. 1 are explained with the same reference numerals as those of corresponding elements of the related art hydrogen generation apparatus shown in Fig. 6.

As shown in Fig. 1, a hydrogen generation apparatus 1 of the first embodiment of the present invention includes: a heat source 2 including a burner (hereinafter referred to as a "burner"); a reforming catalyst 3; a shift catalyst 4; a selective oxidation catalyst 5; an evaporator 8; and a heat insulating material 14 configured to thermally insulate the elements 2, 3, 4, 5 and 8. Hydrocarbon and water serving as a raw material are fed from the raw material feed port 7, and a combustion gas combusted by the burner 2 is discharged from an exhaust port 6. The entirety of the hydrogen generation apparatus is thermally insulated by the heat insulating material 14. Operation for generating a fuel gas is the same as that performed by the related art hydrogen generation apparatus shown in Fig. 6, and hence its detailed description is omitted.

The hydrogen generation apparatus 1 of the present embodiment differs from the related art hydrogen generation apparatus in the configuration of the evaporator 8. The evaporator 8 of the hydrogen generation apparatus 1 of the present embodiment is now described in detail.

As shown in Fig. 1, the evaporator 8 of the embodiment includes the inner tube 9, the outer tube 10, and a hollow helical member 18 which is sandwiched therebetween and which is deformed, for example, in an oval shape, The hollow helical member 18 and the inner and outer tubes 9 and 10 define a helical flow channel 8A through which water, or the like, flows down. A major axis of the oval hollow helical member 18 is disposed in an axial direction of the inner tube 9 and the outer tube 10. The hollow helical member 18 is formed from an elastic deformable material. For example, a thin tube made of stainless steel and having an outer diameter of 3 mm and a thickness of 0.3 mm is helically formed, and the formed helical member is used for the hollow helical member. At least one end of the hollow helical member 18, for example, an upper end, is collapsed and sealed. Both ends of the hollow helical member 18, i.e., upper and lower ends thereof, may also be sealed. With this configuration, it is possible to prevent intrusion of water into the hollow portion of the hollow helical member 18.

According to the embodiment, the hollow helical member 18 is slightly collapsed in a radial direction of the inner tube 9 and the outer tube 10, to thus form an oval hollow helical member 18. By the oval hollow helical member 18, a contact area in the evaporator 8 can be increased, and the hollow helical member 18 can tightly contact the inner and outer tubes 9 and 10. Specifically, the hollow helical member 18 prior to tightly contacting the inner and outer tubes 9 and 10 and having, for example, a circular shape in cross section is compressively deformed within an elastic deformation until defining an oval shape such that the helical member tightly contacts the inner tube 9 and the outer tube 10 without involvement of spacing. This prevents water from flowing down through the spacing between the inner tube 9 or the outer tube 10 and the hollow helical member 18. In the meantime, the temperature of the inner tube 9 and the outer tube 10 in the hydrogen generation apparatus largely changes at start-up and turn-off of the hydrogen generation apparatus. Therefore, the diameter of the inner tube 9 and the outer tube 10 changes due to thermal expansion and thermal contraction. On the occasion, an interval between the inner tube 9 and the outer tube 10 changes. However, the change in the interval is absorbed by elastic deformation of the hollow helical member 18, which can prevent the occurrence of spacing. Specifically, the hollow helical member 18 formed by compression is deformed within the elastic deformation range. Hence, even when the diameter of the inner tube 9 or the outer tube 10 changes, the cross sectional shape of the hollow helical member 18 is correspondingly deformed in a radial direction thereof, whereby the hollow helical member 18 can be maintained to tightly contact the inner tube 9 and the outer tube 10. Since this effect is achieved so long as the hollow helical member 18 maintains its elasticity, it is possible to prevent occurrence of spacing between the hollow helical member 18 and the inner and outer tubes 9 and 10 can be prevented for a long period of time.

A method for manufacturing the evaporator of the hydrogen generation apparatus of the first embodiment of the present invention is hereunder described by reference to Fig. 2.

Fig. 2(a) is a cross sectional view for explaining a state before enlargement of the inner tube 9 of the evaporator of the hydrogen generation apparatus of the first embodiment of the present invention, and Fig. 2(b) is a cross sectional view for explaining a state after the enlargement of the inner tube.

First, as shown in Fig. 2(a), the hollow helical member 18 having, for example, a circular shape in cross section, is disposed on an inner peripheral surface of the outer tube 10, and the inner tube 9 is placed in the hollow helical member. A bottom plate 19 and a top plate 20 are pressed against and tightly contact a bottom and a top of the inner tube 9, respectively. At this time, a pipe 21 connected to a high pressure water pump (not shown) is provided on the top plate 20.

Next, as shown in Fig. 2(b), water 22 is injected into the inner tube 9 by the high pressure water pump. The inner tube 9 is enlarged in the diameter direction thereof by the injection of water, whereby the hollow helical member 18 is compressed in the diameter direction of the inner tube 9. The hollow helical member 18 deformed by compressive deformation to have an oval shape is sandwiched between and tightly contacts the inner tube 9 and the outer tube 10.

With this method, the evaporator 8 free of spacing and water leaks is manufactured.

A ratio of enlargement of the inner tube 9, i.e., a ratio of an outer diameter of the inner tube 9 after enlargement thereof to an outer diameter of the inner tube 9 prior to the enlargement thereof, is preferably about 1 to 5% of the outer diameter of the inner tube 9, although depending on a dimensional accuracy of the inner tube 9, the hollow helical member 18, and the outer tube 10. Specifically, in a case in which the degree of dimensional accuracy of each member is high and in which the degree of accuracy of the setup shown in Fig. 2(a) is also high, the enlargement ratio may be small such as less than 1%. However, it is usually difficult to improve these degrees of accuracy in manufacture. Conversely, in a case in which these degrees of accuracy are low, the ratio of enlargement of the inner tube 9 has to be increased. However, if the ratio of enlargement exceeds 5%, cracking of the inner tube 9 is likely to occur.

In the above-described embodiment, a method for enlarging the inner tube 9 by using water pressure is explained as an example. However, it is not limited thereto. For example, the inner tube 9 may be enlarged by means other than the water pressure, for example, a gas pressure, an oil pressure, etc.

In the above-described embodiment, as an example, the ratio (t/R) of a thickness (t) to an outer dimension (R) of the hollow helical member is 1/10. However, the ratio is not limited thereto. For example, the ratio may be from 1/20 to 1/3.

In the above-described embodiment, as an example, a helical flow channel is formed on condition that the outer dimension of the hollow helical member is 3 mm. However, it is not limited thereto. In other words, the outer dimension of the hollow helical member may be set arbitrarily. Accordingly, the helical flow channel which is defined between the inner tube and the outer tube and through which water flows down can be adjusted by the outer dimension of the hollow helical member. As a consequence, a pressure loss caused by evaporation of water is set within an appropriate range, and power (energy) used for feeding a raw material can be reduced to a small amount.

Another method for manufacturing the evaporator of the hydrogen generation apparatus of the first embodiment of the present invention is hereunder described by reference to Fig. 3.

Fig. 3(a) is a cross sectional view for explaining a state achieved before contraction of the outer tube 10 of an evaporator of another example of the hydrogen generation apparatus of the first embodiment of the present invention, and Fig. 3(b) is a cross sectional view for explaining a state after the contraction of the outer tube.

First, as shown in Fig. 3(a), the hollow helical member 18, for example, having a circular shape in cross section is wound around an outer peripheral surface of the inner tube 9, and the inner tube 9 with the hollow helical member 18 is placed inside the outer tube 10. A bottom plate 23 and a top plate 24 are pressed against and tightly contact the bottom and the top of the outer tube 10, respectively. At this time, a sealed space 25A is defined by the bottom plate 23, the top plate 24, and a cylindrical tube member 25. Moreover, the pipe 21 connected to the high pressure water pump (not shown) is placed at a position of the top plate 24 opposing the sealed space 25A.

As shown in Fig. 3(b), the water 22 is injected into the outside of the outer tube 10 by the high pressure water pump. The outer tube 10 is contracted in the diameter direction thereof by the injection of water, whereby the hollow helical member 18 is compressed in the diameter direction of the outer tube 10. The hollow helical member 18 deformed by compressive deformation to have an oval shape is sandwiched between and tightly contacts the inner tube 9 and the outer tube 10.

With this method, the evaporator 8 free of spacing and water leaks is manufactured.

A ratio of contraction of the outer tube 10, i.e., a ratio of the outer diameter of the outer tube 10 after contraction thereof to the outer diameter of the outer tube 10 prior to the contraction thereof, is preferably about 1 to 5%, similar to the ratio described previously.

In the above-described embodiment, a method for contracting the outer tube 10 by using of a water pressure is explained as an example. However, it is not limited thereto. For example, the outer tube 10 may be contracted by means other than the water pressure, for example, a gas pressure, an oil pressure, etc.

Another example of method for manufacturing the evaporator of the hydrogen generation apparatus of the first embodiment of the present invention is hereunder described by reference to Fig. 4.

Fig. 4(a) is a cross sectional view for explaining a state before enlargement of the hollow helical member 18 in the evaporator of yet another example of the hydrogen generation apparatus of the first embodiment of the present invention, and Fig. 4(b) is a cross sectional view for explaining a state after the enlargement of the hollow helical member 18.

First, as shown in Fig. 4(a), the hollow helical member 18, for example, having a circular shape in cross section is wound around an outer peripheral surface of the inner tube 9. At this time, an upper end of the hollow helical member 18 is collapsed and sealed, and a lower end 26 of the hollow helical member is connected to the high pressure water pump (not shown). The hollow helical member 18 is placed inside the outer tube 10.

As shown in Fig. 4(b), water is injected into the hollow helical member 18 by the high pressure water pump. The hollow helical member 18 is enlarged by the injection of water, whereby the hollow helical member 18 is deformed to have an oval shape and is sandwiched between and tightly contacts the inner tube 9 and the outer tube 10. Subsequently, the lower end 26 of the hollow helical member 18 is cut and separated from the high pressure water pump.

With this method, the evaporator 8 free of spacing and water leaks is manufactured.

According to the manufacturing method of the present embodiment, it is possible to produce the evaporator which has an increased contact area and in which the hollow helical member tightly contacts the inner and outer tubes, by the oval hollow helical member 18 slightly collapsed in the radial direction of the inner tube 9 and the outer tube 10. As a consequence, it is possible to manufacture a highly reliable hydrogen generation apparatus that prevents flowing down of water through spacing between the inner tube 9 or the outer tube 10 and the hollow helical member 18. Further, the hollow helical member 18 is deformed in an elastic region and tightly contacts the inner and outer tubes 9 and 10. Thereby, it is possible to easily manufacture a hydrogen generation apparatus capable of preventing occurrence of spacing over a long period of time by absorbing thermal deformation of the inner tube 9 and the outer tube 10 by deforming the hollow helical member 18.

### (Second Embodiment)

A hydrogen generation apparatus of a second embodiment of the present invention is hereunder described in detail. The hydrogen generation apparatus of the second embodiment of the present invention differs from the hydrogen generation apparatus of the first embodiment in the configuration of the helical member of the evaporator. Since other elements and the manufacturing method are unchanged, the explanations thereof are omitted.

Specifically, in the present embodiment, the helical member differs from the hollow helical member of the first embodiment in that a depressed portion is formed in a portion of the cross sectional shape of the helical member.

The helical member of the evaporator serving as a principal part of the hydrogen generation apparatus of the second embodiment of the present invention is hereunder described in detail by reference to Fig. 5.

Fig. 5(a) is a schematic cross sectional view for explaining an evaporator including a helical member 27 having a U-shaped cross sectional shape in the hydrogen generation apparatus of the second embodiment of the present invention; Fig. 5(b) is a schematic cross sectional view for explaining an evaporator including a helical member 28 having an X-shaped cross sectional shape in the hydrogen generation apparatus of the second embodiment of the present invention; Fig. 5(c) is a schematic cross sectional view for explaining an evaporator including a helical member 30 having a C-shaped cross sectional shape in the hydrogen generation apparatus of the second embodiment of the present invention; and Fig. 5(d) is a general cross sectional view for explaining an evaporator including a helical member 30 having a star-shaped cross sectional shape in the hydrogen generation apparatus of the second embodiment of the present invention.

The evaporator 8 shown in Figs. 5(a) to 5(d) is formed by the same method as that of the first embodiment. That is, a helical member interposed between the inner tube 9 and the outer tube 10 is deformed within the elastic region, so as to tightly contact the inner tube 9 and the outer tube 10. Specifically, a depressed portion is formed in a part of cross sectional shape of each of the helical bodies 27, 28, 29, and 30. With this configuration, when sandwiched and compressed between the inner tube 9 and the outer tube 10, the helical member is easily elastically deformed and tightly contacts the inner tube 9 and the outer tube 10 without involvement of occurrence of spacing. As a consequence, it is possible to prevent occurrence of spacing between the inner tube and the outer tube, thereby preventing flowing down of water due to water leaks.

In the above-described embodiment, cross sectional shapes of four types of helical bodies shown in Fig. 5 are explained as an example. However, it is not limited thereto. For example, the cross sectional shape may be arbitrary, so long as a part of the cross sectional shape is elastically deform such that the helical member easily tightly contacts the inner tube and the outer tube. For example, the cross sectional shapes of the hollow helical member 18 shown in Fig. 5(a) and Fig. 5(c) are concave upward but may be concave downward. A similar advantage, such as prevention of water leaks, can be obtained.

### (Third Embodiment)

A fuel cell system of a third embodiment of the present invention is hereunder described.

The fuel cell system of the third embodiment of the present invention includes the hydrogen generation apparatus described in the first embodiment or the second embodiment and a fuel cell. The fuel cell generates electric power using chemical reaction of a hydrogen-containing fuel gas supplied from the hydrogen generation apparatus with air.

According to the present embodiment, it is possible to provide a fuel cell system which includes a highly reliable hydrogen generation apparatus capable of preventing deterioration of hydrogen generation capability, cracking of catalysts, and generation of carbon monoxide due to bumping and which stably performs power generating operation over a long period of time.

The present patent application is based on Japanese Patent Application (Application No. 2009-54557) filed on March 9, 2009, the entire contents of which are incorporated herein by reference.

### Industrial Applicability

The hydrogen generation apparatus having the evaporator of the present invention is useful for a fuel cell system capable of stably supplying steam required for reforming reaction.

### Description of Reference Signs

- 1: HYDROGEN GENERATION APPARATUS
- 2: HEAT SOURCE (BURNER)
- 3: REFORMING CATALYST
- 4: SHIFT CATALYST
- 5: SELECTIVE OXIDATION CATALYST
- 6: DISCHARGE PORT
- 7: RAW MATERIAL FEED PORT
- 8: EVAPORATOR
- 8A: HELICAL FLOW CHANNEL
- 8B: SPACE
- 9: INNER TUBE
- 10: OUTER TUBE
- 11: HELICAL ROD
- 12: AIR FEED PORT
- 13: FUEL GAS EXIT PORT
- 14: HEAT INSULATING MATERIAL
- 15, 16: RIB
- 17: PIPE
- 18: HOLLOW HELICAL MEMBER
- 19, 23: BOTTOM PLATE
- 20,: 24 TOP PLATE
- 21: PIPE
- 22: WATER
- 25: TUBE MEMBER
- 25A: SEALED SPACE
- 26: LOWER END
- 27, 28, 29, 30: HELICAL MEMBER

## Claims

1. A hydrogen generation apparatus comprising:
a reformer configured to generate a hydrogen-containing gas;
an evaporator which comprises an inner tube, an outer tube, and a deformed helical member helically interposed between the inner tube and the outer tube and which is configured to evaporate water supplied to the reformer; and
a heat source configured to evaporate the water,
wherein the evaporator is configured such that the water is supplied to a helical water channel defined by the inner tube, the outer tube, and the helical member and evaporated by the heat source.

2. The hydrogen generation apparatus according to claim 1,
wherein the helical member is interposed between the inner tube and the outer tube in a state in which the helical member is deformed within an elastic deformation range.

3. The hydrogen generation apparatus according to claim 1 or 2,
wherein the helical member has a hollow oval shape in cross section, and wherein a direction of a major axis of the oval shape is disposed in an axial direction of the inner tube and the outer tube.

4. The hydrogen generation apparatus according to claim 3,
wherein at least one end of the helical member is sealed.

5. The hydrogen generation apparatus according to claim 1 or 2,
wherein a depressed portion is formed in a part of the helical member in cross section.

6. A method for manufacturing a hydrogen generation apparatus that comprises: a reformer configured to generate a hydrogen-containing gas; an evaporator which comprises an inner tube, an outer tube, and a helical member helically interposed between the inner tube and the outer tube and which is configured to evaporate water supplied to the reformer; and a heat source configured to evaporate the water, said method comprising:
a step of helically placing the helical member between the inner tube and the outer tube; and
a step of enlarging the inner tube in a diameter direction thereof such that the helical member is pressed between the inner tube and the outer tube so as to compressively deform the helical member thereby forming the evaporator.

7. A method for manufacturing a hydrogen generation apparatus that comprises: a reformer configured to generate a hydrogen-containing gas; an evaporator which comprises an inner tube, an outer tube, and a helical member helically interposed between the inner tube and the outer tube and which is configured to evaporate water supplied to the reformer; and a heat source configured to evaporate the water, said method comprising:
a step of helically placing the helical member between the inner tube and the outer tube; and
a step of contracting the outer tube in a diameter direction thereof such that the helical member is pressed between the inner tube and the outer tube so as to compressively deform the helical member thereby forming the evaporator.

8. A method for manufacturing a hydrogen generation apparatus that comprises: a reformer configured to generate a hydrogen-containing gas; an evaporator which comprises an inner tube, an outer tube, a helical member helically interposed between the inner tube and the outer tube and which is configured to evaporate water supplied to the reformer; and a heat source configured to evaporate the water, said method comprising:
a step of helically placing the helical member between the inner tube and the outer tube; and
a step of enlarging the helical member until the helical member is deformed to have an oval shape along an axial direction of the inner tube and the outer tube thereby forming the evaporator.

9. The method for manufacturing a hydrogen generation apparatus according to any one of claims 6 to 8,
wherein the hollow helical member is deformed within an elastic deformation range.

10. A fuel cell system comprising:
the hydrogen generation apparatus according to any one of claims 1 to 5; and
a fuel cell.
